Europäisches Patentamt

European Patent Office

Office européen des brevets

(11) Veröffentlichungsnummer: **0 420 161 A2**

# (12) EUROPÄISCHE PATENTANMELDUNG

(21) Anmeldenummer: **90118413.5**

(22) Anmeldetag: **25.09.90**

(51) Int. Cl.5: **H01G 1/11**

(30) Priorität: **27.09.89 DE 3932252**

(43) Veröffentlichungstag der Anmeldung:
**03.04.91 Patentblatt 91/14**

(84) Benannte Vertragsstaaten:
**CH DE FR GB IT LI**

(71) Anmelder: **Siemens Aktiengesellschaft**
**Wittelsbacherplatz 2**
**W-8000 München 2(DE)**

(72) Erfinder: **Erhardt, Werner**
**Lange Strasse 26**
**W-7901 Ballendorf(DE)**

(54) **Elektrischer Kondensator.**

(57) Bei einem elektrischen Kondensator mit Überdruckabreißsicherung ist der Abreißdraht (1) mit einem metallischen Anschlußelement (3) verlötet (5). Der metallische Anschluß (3) ist auf eine Keramikdurchführung (2) aufgelötet (4). Neben der Lötstelle (5) wird der Abreißdraht (1) durch ein Klemmteil (6) festgelegt.

FIG 1

EP 0 420 161 A2

# ELEKTRISCHER KONDENSATOR

Die Erfindung betrifft einen elektrischen Kondensator, insbesondere Leistungskondensator, der in ein Gehäuse eingebaut ist, in welchem eine Uberdruckabreißsicherung angeordnet ist, die aus einem Draht mit Sollabreißstelle besteht, der durch den Gehäusedeckel isoliert hindurchgeführt und verlötet ist.

Abreißsicherungen sprechen bei Überdruck in einem Kondensator an. Dies geschieht durch ein Abreißen der elektrischen Leitungen an einer definierten Sollabreißstelle. Die Leitung ist dabei meist zwischen einer "festen" Einspannstelle (z.B. an der Schoopschicht des Kondensatorwickels) und einem sich bei Druckaufbau bewegenden Teil (meist Deckel oder Boden des Kondensatorgehäuses) befestigt.

Bei der Befestigung im Deckel wird die Leitung durch den Deckel isoliert (metallisierte Keramik) herausgeführt und in einem lötfähigen Metallteil verlötet.

Wenn nun bei Kondensatoren ein langsamer Druckaufbau stattfindet, wird die Lötstelle auf Zug beansprucht. Dies führt zu einem "Herauskriechen" des Drahtes im Lot. Um dieses zu verhindern, werden die Drähte mit einer Quetschung versehen, so daß ein Formschluß entsteht.

Hierzu ist ein zusätzlicher Arbeitsschritt erforderlich, wobei eventuell die Sollabreißstelle durch unsachgemäße Stöße auf den überstehenden Draht, z.B. beim Aufsetzen der Quetschzange, beschädigt werden kann. Eine weitere Schwierigkeit besteht darin, daß flüssiges Lot bei Überhitzung der Lötstelle ins Kondensatorinnere gelangen kann, so daß Kurzschlußgefahr besteht.

Aufgabe der Erfindung ist es, den eingangs angeführten Konden sator derart weiterzubilden, daß in einfacher Weise die vorstehend aufgezeigten Schwierigkeiten verhindert werden.

Diese Aufgabe wird erfindungsgemäß dadurch gelöst, daß am Abreißdraht ein Klemmteil angeordnet ist.

Der Gegenstand der Erfindung wird anhand der folgenden Ausführungsbeispiele näher erläutert.

In der dazugehörenden Zeichnung zeigen
FIG 1 ein Schnittbild mit der Befestigung eines Abreißdrahtes,
FIG 2 ein Klemmteil in Draufsicht,
FIG 3 ein Schnittbild eines Klemmteiles und
FIG 4 einen Kondensator mit Abreißsicherung.

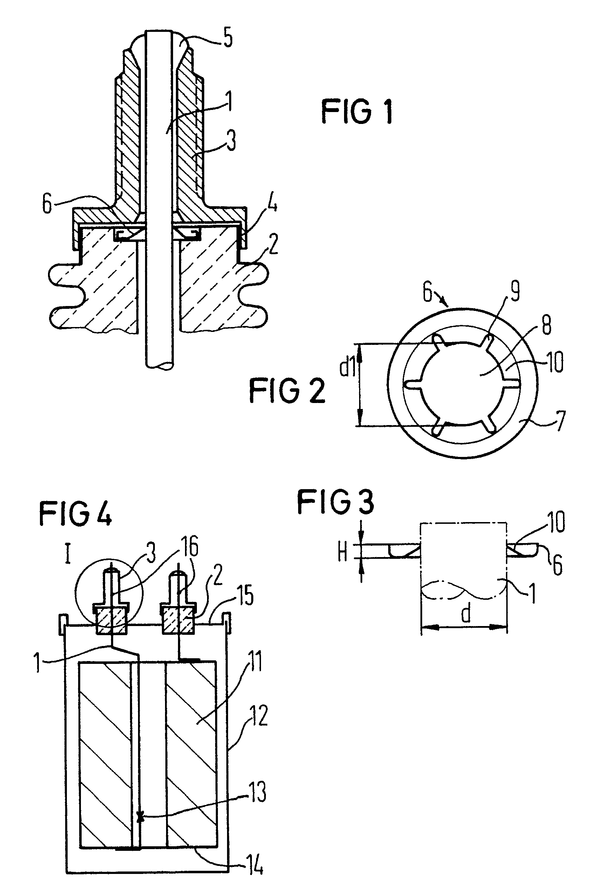

In der FIG 1 ist ein Abreißdraht 1 dargestellt, der mit einer in der FIG nicht dargestellten Sollabreißstelle versehen ist und dessen eines Ende beispielsweise an der Schoopschicht des Kondensatorwickels festgelegt ist. Im Deckel des Kondensatorgehäuses ist eine isolierte Keramikdurchführung 2 angeordnet, auf die ein metallisches Anschlußelement 3 durch. das Lot 4 kontaktiert ist. Anschluß 3 und Durchführung 2 weisen Bohrungen auf, durch die der Abreißdraht 1 geführt ist und am oberen Ende des metallischen Anschlusses 3 mit dem Lot 5 festgelegt ist. Vor dem Anbringen der Lötverbindungen 4, 5 wird ein Klemmteil 6 von oben über den Draht 1 geschoben.

In der FIG 2 ist eine Draufsicht auf das Klemmteil 6 dargestellt, das aus einer metallischen Scheibe 7 besteht, in die ein Loch 8 mit dem Durchmesser $d_1$ und Schlitze 9 eingestanzt sind. Der Durchmesser $d_1$ des Loches 8 wird dabei derart gewählt, daß er kleiner als der Durchmesser d des Abreißdrahtes ist, so daß sich die Abschnitte 10, die zwischen den Schlitzen 7 angeordnet sind, beim Aufschieben den Abreißdraht "hochstellen" und so den Abreißdraht festlegen.

Die FIG 3 zeigt einen Schnitt durch das Klemmteil 6, das auf den Abreißdraht 1 mit dem Durchmesser d aufgeschoben ist. Hierbei werden die Abschnitte 10 um den Betrag H nach oben umgebogen, so daß der Abreißdraht 1 festgeklemmt ist. Ein Durchlaufen von flüssigem Lot bei Überhitzung der Lötstelle wird durch die Abschnitte 10 verhindert, die am Abreißdraht 1 anliegen.

Ein nachträgliches Quetschen des Abreißdrahtes 1 ist ebenfalls nicht erforderlich, so daß Beschädigungen der Sollabreißstelle vermieden werden.

In der FIG 4 ist ein Ausführungsbeispiel dargestellt, bei dem ein Kondensatorwickel 11 in ein Gehäuse 12 eingebaut ist. Der Abreißdraht 1 besitzt eine Sollabreißstelle 13 und ist an der unteren Stirnkontaktschicht 14 des Kondensatorwickels 11 befestigt, z.B. angeschweißt.

Im Deckel des Gehäuses 15 sind keramische Durchführungen 2 angeordnet, auf die metallische Anschlußelemente 3 aufgelötet sind. Die Anschlußelemente 3 sind mit den elektrischen Zuleitungen 16 des Kondensators verbunden, bei denen eine durch den Abreißdraht 1 gebildet wird.

## Ansprüche

1. Elektrischer Kondensator, insbesondere Leistungskondensator, der in einem Gehäuse eingebaut ist, in welchem eine Überdruckabreißsicherung angeordnet ist, die aus einem Draht mit Sollabreißstelle besteht, der durch den Gehäusedeckel isoliert hindurchgeführt und verlötet ist, **dadurch gekennzeichnet,** daß am Abreißdraht (1) ein Klemmteil (6) angeordnet ist.

EP 0 420 161 A2

FIG 1

FIG 2

FIG 4

FIG 3

3